# FASCICULE DE BREVET EUROPEEN

(11) **EP 4 348 012 B1**
(45) Date de publication et mention de la délivrance du brevet: **27.11.2024**
(21) Numéro de dépôt: 22731746.8
(22) Date de dépôt: 23.05.2022
(51) Int. Cl.: F01D 15/10, F01D 25/18, F01D 25/30, F02C 7/32, H02K 7/18, F02C 7/06

(54) **TURBOMACHINE COMPRENANT UNE MACHINE ÉLECTRIQUE INTÉGRÉE À L'ARRIÈRE**
TURBOMASCHINE MIT INTEGRIERTER ELEKTRISCHER MASCHINE IM HINTEREN BEREICH
TURBOMACHINE COMPRISING AN ELECTRIC MACHINE INTEGRATED IN THE REAR

(30) Priorité: 27.05.2021 FR 2105516
(43) Date de publication de la demande: 10.04.2024
(73) Titulaire: SAFRAN AIRCRAFT ENGINES, 75015 Paris (FR)
(72) Inventeur: CHARIER, Gilles, Alain, Marie, 77550 MOISSY-CRAMAYEL (FR); TRUCO, Romain, 77550 MOISSY-CRAMAYEL (FR); BECOULET, Julien, Fabien, Patrick, 77550 MOISSY-CRAMAYEL (FR)
(74) Mandataire: Brevalex
(86) Numéro de dépôt international: PCT/FR2022/050970
(87) Numéro de publication internationale: WO 2022/248798

(56) Documents cités:
- EP-A1- 3 246 528
- EP-A1- 3 613 977
- EP-A1- 3 708 787
- EP-A1- 3 763 929
- FR-A1- 3 027 625
- FR-A1- 3 073 569

## Description

L'invention présente a trait à une turbomachine, dans laquelle une machine électrique est intégrée à l'arrière.

Cette machine électrique peut être un générateur électrique pur, ou une machine réversible pouvant aussi travailler en moteur électrique ; elle s'ajoute à la machine électrique traditionnellement placée sur une boîte d'engrenage à la périphérie de la turbomachine pour fournir à celle-ci et à d'autres équipements d'aéronefs l'énergie électrique dont ils ont besoin. Un tel exemple de turbomachine, comprenant une machine électrique intégrée à l'arrière, est décrit dans le document FR 3 027 625 A1.

L'intégration d'une telle machine électrique à l'arrière de la turbomachine suscite plusieurs difficultés. La température y est tout d'abord très élevée, et la machine électrique doit donc être protégée thermiquement.

EP 3613977 A1 décrit une machine électrique à l'arrière d'une turbomachine et détachable de la turbomachine par modules, ce qui semble rendre ce document le plus proche de l'invention.

EP 3763929 A1 décrit le montage d'une machine électrique à l'extrémité d'un arbre haute pression de turbomachine, dans lequel le rotor de la machine électrique est monté sur un bout d'arbre coulissant qui prolonge l'arbre haute pression.

FR 3073569 A1 décrit une machine électrique montée sur un arbre d'hélice d'un turbopropulseur, avec un rotor débrayable.

EP 3246528 A1 et EP 3708787 A1 décrivent d'autres turbomachines équipées de machines électriques.

Les contraintes d'aménagement sont fortes, puisque l'espace est réduit.

L'équilibrage dynamique des corps tournants est fortement compliqué pour les raisons que voici. Il est tout d'abord avantageux que le rotor de la machine électrique soit entraîné par l'arbre de la turbomachine qui s'étend le plus en arrière et s'arrête devant la machine, c'est-à-dire l'arbre basse pression ; un accouplement simple pourrait alors être envisagé. Mais le rotor alourdit l'arbre basse pression, d'autant plus qu'il est placé en porte-à-faux en arrière des paliers qui le soutiennent. Ces conséquences sont d'autant plus nettes que les évolutions actuelles des moteurs d'aéronefs conduisent à une miniaturisation, c'est-à-dire à une diminution des diamètres des arbres haute et basse pressions. Il faut ajouter que le rotor de la machine électrique ne peut en réalité pas être monté directement sur l'arbre basse pression, car il doit pouvoir être découplé de lui dans certaines situations de pannes, par exemple des courts-circuits, notamment dans le cas où la machine électrique est à aimants permanents. Il faut donc ajouter un dispositif de désaccouplement entre l'arbre basse pression et le rotor de la machine électrique, et faire soutenir le rotor par des paliers autonomes. Le dispositif est alors alourdi, et les problèmes d'aménagement et de tenue aux sollicitations dynamiques risquent de devenir plus aigus. Les paliers supplémentaires et le dispositif de désaccouplement doivent eux-mêmes tenir aux chaleurs élevées qu'ils subissent.

On voudrait enfin que la machine électrique et ses pièces associées soient facilement démontables du reste de la turbomachine, afin de permettre des remplacements aisés.

L'invention englobe plusieurs mesures qui permettent, séparément et en combinaison, de réduire ou supprimer les difficultés évoquées ci-dessus. L'agencement obtenu à l'arrière de la turbomachine est relativement simple, compact, facilement démontable, et relativement peu perturbateur des équilibres dynamiques de l'arbre basse pression ; des échauffements excessifs sont enfin peu à craindre.

Sous une forme générale, qui procure déjà ces avantages, l'invention est ainsi relative à une turbomachine comprenant un arbre basse pression, s'étendant selon un axe de la turbomachine qui définit un avant et un arrière ; un stator de turbomachine soutenant l'arbre basse pression par des paliers dont un palier arrière ; une machine électrique située à une partie arrière de la turbomachine, et comprenant un rotor entraîné de façon déconnectable par l'arbre basse pression et un stator fixé au stator de la turbomachine ; comprenant un tourillon de support du rotor de la machine électrique, comprenant un tronçon d'arbre fixé de manière séparable à une extrémité arrière de l'arbre basse pression en prolongeant l'arbre basse pression, une armature à laquelle le rotor de la machine électrique est fixé et qui entoure le tronçon d'arbre ; caractérisé en ce que le stator de la machine électrique entoure le rotor de la machine électrique ; et en ce que la turbomachine comprend encore au moins un palier monté entre l'armature et le tronçon d'arbre ; et un manchon mobile axialement autour de l'arbre basse pression et/ou du tronçon d'arbre (c'est-à-dire qu'il est mobile axialement autour de l'un d'eux seulement, ou des deux), lié en rotation à l'arbre basse pression et au tronçon d'arbre, et doté de moyens d'accouplement dirigés vers l'arrière et aptes à engrener avec des moyens d'accouplement complémentaires, dirigées vers l'avant, de l'armature.

On appelle ici « arbre basse pression » un arbre associé à la rotation d'une turbine tout à l'arrière de la turbomachine, et qui s'étend donc plus en arrière que d'autres arbres éventuels comme un arbre haute pression.

Les constituants de la machine électrique peuvent être placés dans une cavité à l'arrière de la turbomachine, dans laquelle débouche l'extrémité de l'arbre basse pression et qui est fermée à l'arrière par un capot conique. Le tourillon porteur du rotor de la turbomachine forme un ensemble unitaire qui peut être fixé facilement à l'extrémité de l'arbre basse pression, et le stator de la machine peut être fixé au stator de la turbomachine, sans presque modifier la conception des turbomachines existantes dépourvues de la machine électrique. L'allongement de l'arbre basse pression dû à l'addition du tronçon d'arbre, et le porte-à-faux du rotor, sont modérés. Le palier ou les paliers intégrés au tourillon peuvent facilement être lubrifiés par un dispositif autonome, distinct des dispositifs de lubrification consacrés aux paliers de support de l'arbre basse pression et de l'arbre haute pression, donc sans modifier encore les circuits de lubrification existants. Le manchon d'accouplement reliant de manière amovible en rotation l'arbre basse pression et le rotor de la machine électrique est compact et occupe, sans difficulté à le concevoir, un volume vide encore présent autour de l'extrémité de l'arbre basse pression et en arrière du stator de la turbomachine. Il est par ailleurs facile à commander, et n'introduit pas de perturbations dynamiques importantes. Et le démontage des différents composants (tourillon, manchon d'accouplement et stator de la machine électrique) peut être accompli facilement.

De nombreux perfectionnements peuvent être apportés à cette conception générale. Il est tout d'abord intéressant que le palier ou les paliers soient lubrifiés à la graisse, en étant contenus dans une enceinte de lubrification close. Une lubrification dynamique, habituelle pour les turbomachines, par une circulation forcée d'huile n'est en effet pas nécessaire pour ces paliers particuliers, qui sont inactifs à l'état habituel d'entraînement du rotor de la machine électrique, dans lequel le manchon d'accouplement solidarise en rotation l'armature avec l'arbre basse pression et le tronçon d'arbre. Une rotation entre l'armature et le tronçon d'arbre existe seulement dans les conditions de pannes de la machine électrique, pendant lesquelles un désaccouplement du manchon est ordonné. Des frottements et de la chaleur sont alors produits par les paliers disposés entre le tronçon d'arbre et le rotor, mais cet état est généralement bref, et la chaleur produite est alors insuffisante pour produire des dommages importants. De tels dommages sont susceptibles de concerner seulement les paliers, qu'on peut remplacer facilement. Et la chaleur environnante, produite le service de la turbomachine, est largement absorbée par les dispositifs de refroidissement à circulation de fluide, déjà existants, qui desservent les pièces voisines du tourillon : l'échauffement qu'il subit reste modéré même en l'absence d'un dispositif de refroidissement particulier.

Il est avantageux que l'enceinte puisse être alimentée en graisse quelles que soient les circonstances : on préconise alors que le tronçon d'arbre soit creux et contienne un réservoir de graisse qui communique à l'enceinte par au moins un perçage.

Cette conception peut elle-même être perfectionnée. La graisse du réservoir peut contribuer à lubrifier aussi les dispositifs d'accouplement entre le manchon d'une part, l'armature, l'arbre basse pression ou le tronçon d'arbre d'autre part. L'enceinte de lubrification est alors délimitée en partie par ces pièces.

Et comme le réservoir de graisse est à une position radiale plus proche de l'axe que les dispositifs à lubrifier, la graisse est entraînée par les forces centrifuges jusqu'à ces dispositifs.

Les dispositifs d'accouplement peuvent être des réseaux de cannelures orientées radialement ou axialement, selon que la connexion entre les pièces qu'elles relient doit être interrompue ou maintenue pendant leurs mouvements axiaux d'un état à l'autre.

D'après une autre disposition avantageuse quant à la facilité de l'aménagement, la turbomachine comprend encore un actionneur du manchon qui est logé axialement entre le stator de turbomachine et l'armature, et radialement entre l'armature et le manchon.

Une conception simple et avantageuse de l'actionneur comprend au moins un galet mobile axialement et tournant librement autour d'un axe radial, apte à buter contre une collerette plane du manchon et à repousser la collerette.

Afin de maintenir l'accouplement entre le manchon et l'armature sauf quand sa suppression est ordonnée, l'agencement comprend avantageusement un ressort engagé autour de l'arbre basse pression, et comprimé entre l'arbre basse pression et le manchon.

Toutes ces caractéristiques ne s'accompagnent pas d'un accroissement important d'encombrement du dispositif.

D'autres perfectionnements possibles améliorent le caractère démontable par module du dispositif associé à la machine électrique, et en particulier du tourillon porteur de son rotor. Il est tout d'abord avantageux que le tronçon d'arbre soit fixé à l'extrémité arrière de l'arbre basse pression par un écrou.

Le démontage est alors facile si le tronçon d'arbre contient un creux, l'écrou comprend des reliefs d'accrochage par un outil qui sont saillants dans le creux, et l'écrou comprend un frein anti-rotation placé dans le creux.

En combinant cette caractéristique à une des précédentes, d'après laquelle le tronçon d'arbre contient un réservoir de graisse, on peut avantageusement, faisant coïncider le creux avec le réservoir, le munir d'une ouverture à une extrémité arrière du tronçon d'arbre et d'un bouchon fermant à volonté à l'ouverture. Toutes ces mesures permettent d'accéder facilement à l'écrou de fixation du tourillon à l'extrémité de l'arbre basse pression pendant une campagne d'entretien, en introduisant un outil dans le creux, ou le réservoir préalablement vidé de son contenu.

En variante, le réservoir pourrait occuper seulement une partie périphérique du volume intérieur du tronçon d'arbre, afin d'accéder plus facilement à l'écrou de fixation, par la partie centrale du volume intérieur, qui reste alors vide.

Et la facilité de démontage est complète si le tourillon est séparable de l'arbre basse pression et du manchon en coulissant vers l'arrière, le manchon est fixé au stator de turbomachine par une première bride boulonnée accessible de l'arrière, et le stator de la machine électrique est fixée au stator de la turbomachine par une seconde bride boulonnée accessible de l'arrière.

Pour résumer, un aspect important de l'invention est que le tourillon, le manchon, le stator de la machine électrique, et l'actionneur quand il est présent aussi à l'arrière de la turbomachine, sont formés en modules distincts et unitaires, démontables successivement de la turbomachine (et remontables de même). Leur caractère modulaire, distinct et unitaire signifie qu'ils forment des portions indépendantes du dispositif, dont chacune est apportée ou enlevée en bloc, qu'ils sont assemblés au reste de la turbomachine sans être nécessairement assemblées entre eux, et qu'ils sont remplaçables séparément.

Les différents aspects, caractéristiques et avantages de l'invention seront maintenant décrits plus en détail au moyen de la description détaillée des figures suivantes, qui en illustrent une réalisation particulière, donnée à titre purement illustratif :
- la Figure 1 représente schématiquement l'arrière d'une turbomachine et les différents constituants de l'invention ;
- la Figure 2 illustre plus en détail ses principaux constituants ; et
- la Figure 3 et
- la Figure 4 illustrent les deux états du dispositif ;
- la Figure 5 représente un schéma d'ensemble du dispositif et de sa disposition sur la turbine;
- la Figure 6 représente une variante de réalisation.

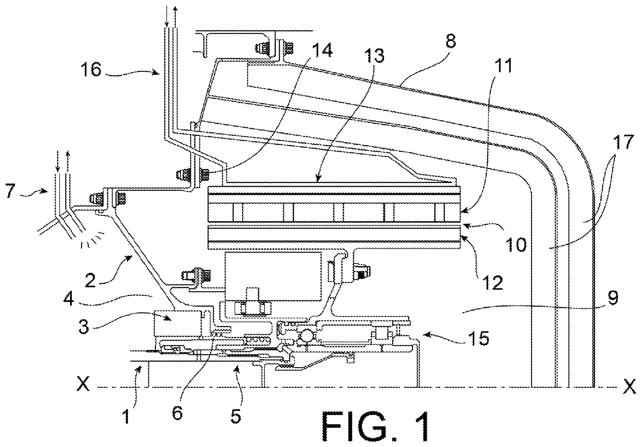

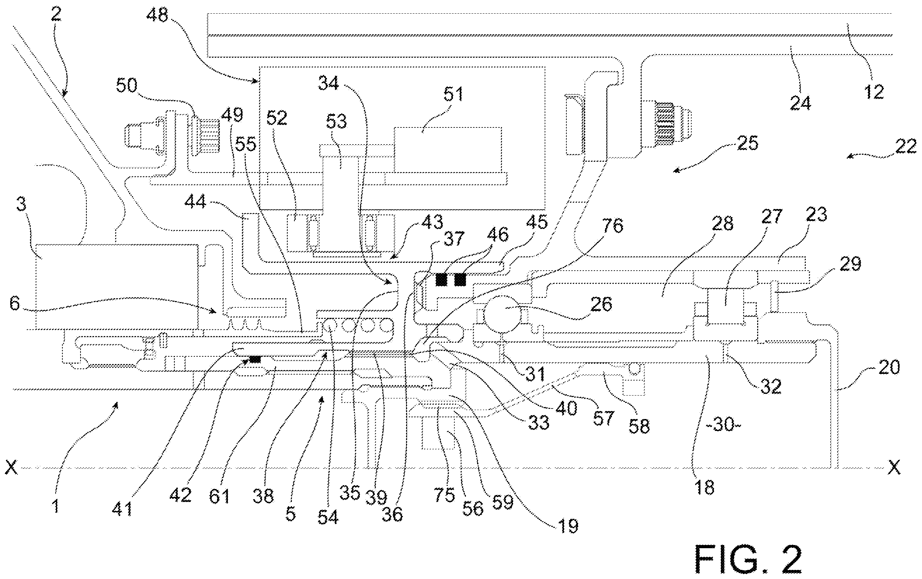

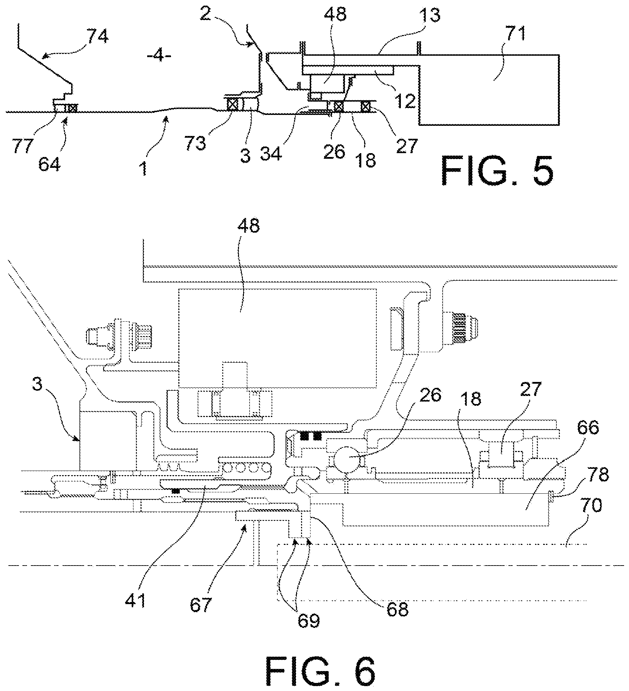

La description porte d'abord sur les figures 1 et 2. La turbomachine comprend un axe central X-X s'étendant dans une direction longitudinale, entre un sens avant (à gauche des figures) et un sens arrière (à droite des figures). Seule la partie arrière de la turbomachine près de l'axe X-X est représentée, le reste de la turbomachine n'étant pas modifié par l'invention. La turbomachine comprend un arbre basse pression 1 disposé dans l'axe X-X et tournant autour de cet axe. Elle comprend un stator 2 dans lequel l'arbre basse pression 1 est soutenu par divers paliers, dont un palier arrière, qui est le plus en arrière des paliers au moyen desquels l'arbre basse pression 1 est soutenu par le stator 2. La partie visible du stator 2 est précisément un carter d'échappement de la turbomachine. Les paliers, entre autres le palier arrière, sont contenus dans des enceintes lubrifiées délimitées par le stator 2. L'arbre basse pression 1 a une extrémité 5 qui sort de l'enceinte lubrifiée arrière 4 contenant le palier arrière, à l'arrière d'un joint principal d'étanchéité 3 qui délimite l'enceinte lubrifiée arrière 4, par une ouverture circulaire du stator 2 munie d'un joint d'étanchéité à labyrinthe 6 qui complète le joint principal d'étanchéité 3. Un circuit de lubrification 7, seulement schématisé, passe par l'enceinte de lubrification arrière 4 et apporte de l'huile au palier arrière 3, afin aussi d'évacuer la chaleur qu'il produit. Le palier arrière est représenté à la figure 5, à la référence 73. Il est immédiatement en avant du joint principal d'étanchéité 3. L'enceinte lubrifiée arrière 4 est fermée à l'avant par une autre partie 74 du stator 2 et un autre ensemble composé d'un palier 64 et d'un joint d'étanchéité 77 reliant l'arbre basse pression 1 à ladite autre partie 74.

La turbomachine a un volume vide en arrière du stator 2 près de l'axe X-X, dans le cône arrière de la turbine, et l'extrémité 5 débouche hors du stator 2 à cet endroit. Le volume correspondant peut être isolé de l'extérieur par un capot conique 8 pour former une cavité arrière 9 qui peut recevoir divers équipements, comme une machine électrique 10 comprenant un stator 11 et un rotor 12 entouré par le stator 11. Le stator 11 consiste ici en des enroulements électriques et le rotor 12 en des aimants permanents, mais d'autres dispositions de la machine électrique seraient possibles. Le stator 11 comporte une armature de stator 13 rigide, fixée au stator 2 de la turbomachine par une première bride 14. Le rotor 12 est porté par une des pièces principales de l'invention, dite tourillon 15, qui sera décrite en détail et qui est portée par l'extrémité 5 de l'arbre basse pression 1. Un circuit de refroidissement 16, seulement ébauché lui aussi, passe par le stator 2 de la turbomachine et évacue la chaleur produite aux alentours du stator 11 de la machine électrique. Et la cavité arrière 9 est protégée de la chaleur produite autour d'elle par les gaz d'échappement de la turbomachine, par des couches isolantes 17 en doublure intérieure du capot conique 8.

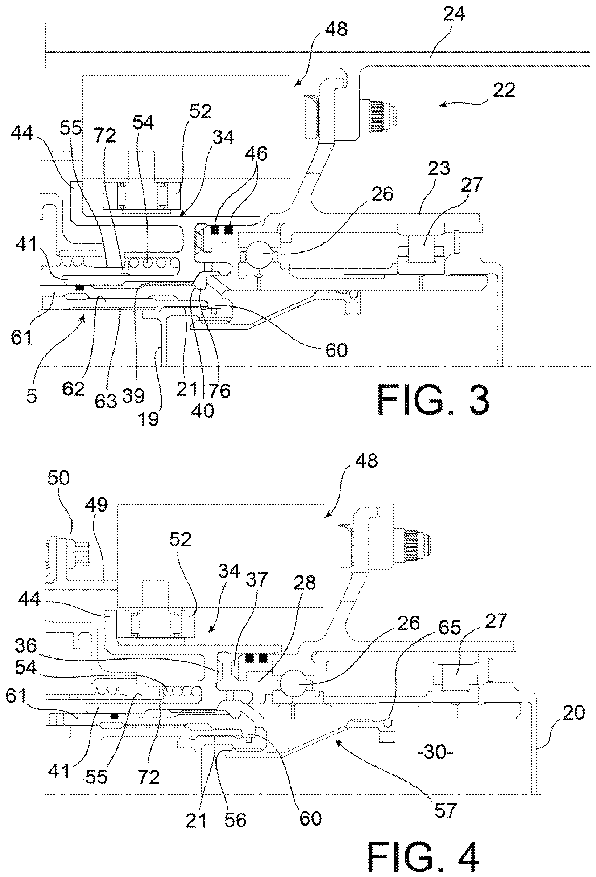

La description porte maintenant, en recourant surtout à la figure 2, sur le tourillon 15. Il comprend d'abord un tronçon d'arbre 18, qui prolonge d'une courte étendue l'arbre basse pression 1 à l'arrière de son extrémité 5, et qui est fixé à l'extrémité 5, de manière coaxiale à elle, par un écrou 19. Le tronçon d'arbre 18 est creux, en forme de manchon évidé autour de l'axe X-X, mais clos à l'arrière par un bouchon 20 vissé autour de son extrémité. L'écrou 19 est logé (on se reportera aussi aux figures 3 et 4 pour ces détails de description) dans le creux du tronçon d'arbre 18, est vissé dans un taraudage 21 de l'extrémité 5, repousse un épaulement 60 du tronçon d'arbre 18 en le faisant buter contre la face arrière de l'extrémité 5, Une manchette 61 du tronçon d'arbre 18, qui s'étend vers l'avant, s'appuie sur la face extérieure de l'extrémité 5 et assure la coaxialité de l'extrémité 5 et du tronçon d'arbre 18.

Une armature 22, porteuse du rotor 12 de la machine électrique 10, est disposée autour du tronçon d'arbre 20. Elle comporte un manchon intérieur 23, un manchon extérieur 24 et une paire de brides 25, respectivement solidaires des manchons, à peu près planes et d'orientation radiale, et boulonnées entre elles. L'armature 22 forme donc une structure rigide. Un palier de rotation, consistant ici en un roulement à billes 26 à l'avant et un roulement à rouleaux 27 à l'arrière, est disposé radialement entre le manchon intérieur 23 et le tronçon d'arbre 18 pour les solidariser, tout en permettant leur rotation. Les positions des roulements 26 et 27 dans la direction de l'axe X-X, par rapport au tronçon d'arbre 18 et au manchon intérieur 23, sont garanties par des systèmes de butées et entretoises, visibles sur les dessins. Une enceinte de lubrification 28 est formée entre le tronçon d'arbre 18 et le manchon intérieur 23. Elle englobe les roulements 26 et 27 ; elle est close à l'arrière par un joint d'étanchéité 29 placé entre le manchon intérieur 23 et la paroi cylindrique du bouchon 20 ; et elle communique avec un réservoir 30 qui est le volume creux englobé par le tronçon d'arbre 18 qui s'étend, d'arrière en avant, du bouchon 20 à l'extrémité 5. La communication se fait par des perçages 31 et 32 menant directement aux roulements 26 et 27 ; un perçage principal 33 relie toutefois le réservoir 30 à une autre partie 76 de l'enceinte de lubrification 28, située plus en avant et sur laquelle on reviendra.

Un autre élément important du dispositif est un manchon d'accouplement 34 qui assure la commutation entre deux états du dispositif. Il comprend une partie principale 35, plane et radialement médiane, pourvue de cannelures radiales 36 dirigées vers l'arrière, réparties sur sa circonférence, et qui, dans la position habituelle, engrènent avec des cannelures radiales 37 correspondantes, situées à l'avant du manchon intérieur 23 et dirigées vers l'avant. Le manchon d'accouplement 34 comprend encore une partie radialement intérieure 38 globalement cylindrique, pourvue de cannelures axiales 39 à sa face dirigée vers l'intérieur, et qui engrènent avec des cannelures axiales 40 situées sur la manchette 61. La partie radialement intérieure 38 comporte une portée avant 41 qui glisse sur la manchette 61; un joint 42, disposé à cet endroit, limite la cavité de lubrification 28 à l'avant. On notera enfin d'autres cannelures axiales 62 et 63, appartenant respectivement à la manchette 61 et à l'extrémité 5, engrenant les unes dans les autres et qui maintiennent le tronçon d'arbre 18 et l'arbre basse pression 1 solidaires en rotation.

Le manchon d'accouplement 34 comprend enfin une partie radialement extérieure 43, globalement cylindrique, qui comprend à l'avant un évasement 44, proche du stator 2 de la turbomachine mais séparé de lui, et à l'arrière une portée 45 qui glisse sur la face extérieure de l'avant du manchon intérieur 23 ; des joints 46, placés à cet endroit, achèvent d'isoler la cavité de lubrification 28 à l'égard de l'extérieur ; la cavité de lubrification 28 englobe donc aussi les cannelures radiales 36 et 37 et axiales 39 et 40, que la graisse lubrifie.

Un actionneur 48 est disposé dans le volume compris radialement entre le manchon d'accouplement 34, plus précisément sa partie radialement extérieure 43, et le manchon extérieur 24 de l'armature 22, et il est compris axialement entre le stator de turbomachine 2 à l'avant et les brides 25 à l'arrière. L'actionneur 48 est muni d'un support 49 retenu sur le stator 2 de turbomachine par une deuxième bride 50 concentrique à la première bride 14 et entourée par elle. Il comprend des moteurs 51, tels que des vérins électriques, aptes à déplacer vers l'avant des galets 52 tournants autour d'axes radiaux 53 repoussés par les moteurs 51. L'alimentation des moteurs 51 en électricité ou en fluide peut s'effectuer par des fils électriques ou des câbles passant le long du stator 2 de la turbomachine.

Un ressort 54 hélicoïdal est comprimé entre la partie principale 35 du manchon d'accouplement 34 à l'arrière, et une manchette 55, appartenant à l'arbre basse pression 1 et à laquelle appartient une moitié du joint à labyrinthe 6, à l'avant. La portée avant 41 comporte une saillie extérieure annulaire 72 ou un joint (référencé aux figures 3 et 4) qui restreint la section de fuites de gaz que la portée avant 41 fait avec ladite manchette 55, pour accroître l'étanchéité de l'enceinte lubrifiée arrière 4.

L'état principal du dispositif est celui des figures 2 et 3 : les cannelures radiales 36 et 37 engrènent les unes dans les autres, le ressort 54 repousse le manchon d'accouplement 34 vers l'arrière, et l'armature 22, l'arbre basse pression 1, le tronçon d'arbre 18 et le manchon d'accouplement 34 tournent à l'unisson et entraînent le rotor 12 de la machine électrique 10, qui est donc active.

Si par contre (ceci est représenté à la figure 4) un désaccouplement du rotor 12 et de l'arbre basse pression 1 doit être commandé au moyen de l'actionneur 48 : les moteurs 51 sont sollicités pour déplacer les galets 52 contre la collerette 44 et la repousser vers l'avant, ce qui disjoint les cannelures radiales 36 et 37 et permet à l'armature 22 et au rotor 12 de tourner à une vitesse différente de l'arbre basse pression 1. Les roulements 26 et 27 se mettent en mouvement et suscitent une circulation de la graisse à travers les perçages 32 et 33. Les portées 41 et 45 maintiennent la fermeture de la cavité de lubrification 28 malgré leurs mouvements coulissants et les cannelures axiales 39 et 40 continuent à engrener les unes dans les autres. Quand les moteurs 51 sont relâchés, le ressort 54 ramène sûrement le manchon d'accouplement 34 à la position habituelle.

Le démontage à des fins d'entretien ou de remplacement des éléments du système est facile à accomplir, une fois que le capot conique 8 a été retiré. Il s'effectue en enlevant successivement chaque module du dispositif parmi le stator 11 de la machine électrique 10, le tourillon 15, l'actionneur 48 et le manchon d'accouplement 34. L'opérateur reste à la même position. Le démontage du stator 11 de la machine électrique 10 est tout d'abord fait en démontant la première bride 14. Le bouchon 20 est ensuite dévissé, le réservoir 30 vidé de sa graisse, et un outil introduit vers l'avant pour tourner le boulon 19, en s'appuyant sur des reliefs radialement intérieurs 56, saillant à l'intérieur du réservoir 30. Le tourillon 15 est alors démonté de l'extrémité 5 de l'arbre basse pression 1. L'actionneur 48 est ensuite retiré en démontant la deuxième bride 50. Le manchon d'accouplement 43 est alors démontable lui aussi, simplement en le tirant. Tous les mouvements s'effectuent en ligne droite vers l'arrière.

Le réservoir 30 contient un frein 57 de l'écrou 19, composé d'une tige flexible dont une extrémité arrière 58 est arrêtée contre la paroi intérieure du tronçon d'arbre 18 par l'engagement d'un joint élastique 65 dans une gorge, et dont l'extrémité avant 59 comprend des cannelures axiales 75 engagée dans des cannelures complémentaires de l'écrou 19. La tige flexible est courbée avant de tourner l'écrou 19, afin de le dégager de l'extrémité avant 59.

Une variante de réalisation de cette partie du dispositif est représentée à la figure 6. Le frein 57 est absent, le réservoir 30 occupant tout le volume vide dans le tronçon d'arbre 18 est remplacé par un réservoir annulaire 66 à la périphérie du volume vide 30. L'écrou 19 est remplacé par un écrou 67 et un contre-écrou 68 se bloquant mutuellement. L'écrou 67 et le contre-écrou 68 sont munis de reliefs radiaux intérieurs 69 qu'un outil 70, introduit comme précédemment par l'arrière dans le tronçon d'arbre 18, peut agripper pour provoquer le serrage et le desserrage. Toutefois, l'outil 70 passe dans un volume libre de graisse car le réservoir 66 est à des rayons plus grands, ce qui dispense de faire une vidange dans ces circonstances. Dans cette variante, le bouchon 20 ainsi que l'écrou 67 et le contre-écrou 68 n'ont pas besoin d'avoir une paroi radiale continue pour fermer le volume vide 30. Le réservoir annulaire 66 est ici mobile vers l'arrière s'il doit être extrait du volume vide, et retenu sinon par un joint 78 logé dans une gorge du tronçon d'arbre 18.

La figure 5 illustre qu'un boîtier de composants électroniques 71 peut être monté sur l'armature de stator 13 de la machine électrique.

## Revendications

1. Turbomachine, comprenant un arbre basse pression (1) s'étendant selon un axe (X-X) de la turbomachine qui définit un avant et un arrière ; un stator (2) de turbomachine soutenant l'arbre basse pression par des paliers dont un palier arrière (73) ; une machine électrique (10) située à une partie arrière de la turbomachine, et comprenant un rotor (12) entraîné de façon déconnectable par l'arbre basse pression (1), et un stator (11) fixé au stator (2) de la turbomachine ; comprenant un tourillon (15) de support du rotor (12) de la machine électrique, le tourillon comprenant un tronçon d'arbre (18) fixé de manière séparable à une extrémité (5) arrière de l'arbre basse pression en prolongeant l'arbre basse pression, une armature (22) à laquelle le rotor de la machine électrique est fixé et qui entoure le tronçon d'arbre (18), **caractérisée en ce que** le stator (11) de la machine électrique entoure le rotor (12) de la machine électrique ; et la turbomachine comprend encore au moins un palier (26, 27) monté entre l'armature et le tronçon d'arbre ; et un manchon (34) mobile axialement autour de l'arbre basse pression (1) et/ou du tronçon d'arbre (18), lié en rotation à l'arbre basse pression et au tronçon d'arbre, et doté de moyens d'accouplement (36) dirigés vers l'arrière et aptes à engrener avec des moyens d'accouplement complémentaires (37), dirigées vers l'avant, de l'armature (22).

2. Turbomachine selon la revendication 1, **caractérisée en ce que** l'au moins un palier (26, 27) est lubrifié à la graisse et est contenu dans une enceinte de lubrification (28) close.

3. Turbomachine selon la revendication 2, **caractérisée en ce que** le tronçon d'arbre (18) est creux et contient un réservoir (30) de graisse qui communique à l'enceinte de lubrification par au moins un perçage (31, 32, 33).

4. Turbomachine selon l'une quelconque des revendications 1 à 3, **caractérisée en ce que** les moyens d'accouplement (36, 37) sont des réseaux de cannelures radiales.

5. Turbomachine selon l'une quelconque des revendications 1 à 4, **caractérisée en ce que** le manchon est lié au tronçon d'arbre (18) par des réseaux de cannelures axiales (39, 40).

6. Turbomachine selon les revendications 2, 4 et 5, **caractérisée en ce que** l'enceinte (28) de lubrification contient aussi les cannelures radiales et axiales.

7. Turbomachine selon l'une quelconque des revendications 1 à 6, **caractérisée en ce qu'**elle comprend un actionneur (48) du manchon (34), qui est logé axialement entre le stator (2) de turbomachine et l'armature (22), et radialement entre l'armature (22) et le manchon (34).

8. Turbomachine selon la revendication 7, **caractérisée en ce que** l'actionneur comprend au moins un galet (52) mobile axialement et tournant librement autour d'un axe radial (53), apte à buter contre une collerette (44) plane du manchon et à repousser la collerette.

9. Turbomachine selon l'une quelconque des revendications 1 à 8, **caractérisée en ce qu'**elle comprend un ressort (54) engagé autour de l'arbre basse pression, et comprimé entre l'arbre basse pression (1) et le manchon (34).

10. Turbomachine selon l'une quelconque des revendications 1 à 9, **caractérisée en ce que** le tronçon d'arbre est fixé à l'extrémité (5) arrière de l'arbre basse pression par un écrou (19).

11. Turbomachine selon l'une quelconque des revendications 1 à 10, **caractérisée en ce que** le tourillon (15) est séparable de l'arbre basse pression et du manchon en coulissant vers l'arrière, le manchon (34) est fixé au stator (2) de turbomachine par une première bride (49) boulonnée accessible de l'arrière, et le stator (11) de la machine électrique est fixée au stator (2) de la turbomachine par une seconde bride (14) boulonnée accessible de l'arrière.

12. Turbomachine selon l'une quelconque des revendications précédentes, **caractérisée en ce que** le tourillon (15), le manchon (34), et le stator (11) de la machine électrique sont formés en modules distincts et unitaires, démontables successivement de la turbomachine.

13. Turbomachine selon les revendications 7 et 12, **caractérisée en ce que** l'actionneur (48) est un autre module unitaire, distinct desdits modules et démontable séparément d'eux de la turbomachine.

## Patentansprüche

1. Turbomaschine, umfassend eine Niederdruckwelle (1), die sich entlang einer Achse (X-X) der Turbomaschine erstreckt, die eine Vorderseite und eine Rückseite definiert; einen Stator (2) der Turbomaschine, der die Niederdruckwelle durch Lager, darunter ein hinteres Lager (73), trägt; eine elektrische Maschine (10), die sich an einem hinteren Abschnitt der Turbomaschine befindet und einen Rotor (12), der trennbar von der Niederdruckwelle (1) angetrieben wird, und einen Stator (11) umfasst, der am Stator (2) der Turbomaschine befestigt ist; umfassend einen Lagerzapfen (15) zum Tragen des Rotors (12) der elektrischen Maschine, wobei der Lagerzapfen ein Wellensegment (18) umfasst, das trennbar an einem hinteren Ende (5) der Niederdruckwelle befestigt ist, indem es die Niederdruckwelle verlängert, und einen Rahmen (22), an dem der Rotor der elektrischen Maschine befestigt ist und der das Wellensegment (18) umgibt, **dadurch gekennzeichnet, dass** der Stator (11) der elektrischen Maschine den Rotor (12) der elektrischen Maschine umgibt; und die Turbine außerdem mindestens ein Lager (26, 27), das zwischen dem Rahmen und dem Wellensegment montiert ist; und eine Hülse (34) umfasst, die axial um die Niederdruckwelle (1) und/oder das Wellensegment (18) herum beweglich ist, die in Drehung mit der Niederdruckwelle und dem Wellensegment verbunden ist und mit einer Kupplungseinrichtung (36) versehen ist, die zur Rückseite hin gerichtet und dazu ausgelegt ist, mit einer komplementären Kupplungseinrichtung (37) des Rahmens (22), die zur Vorderseite hin gerichtet ist, in Eingriff zu gelangen.

2. Turbomaschine nach Anspruch 1, **dadurch gekennzeichnet, dass** das mindestens eine Lager (26, 27) mit Schmierfett geschmiert ist und in einer geschlossenen Schmierkammer (28) enthalten ist.

3. Turbomaschine nach Anspruch 2, **dadurch gekennzeichnet, dass** das Wellensegment (18) hohl ist und einen Schmierfettbehälter (30) enthält, der über mindestens ein Loch (31, 32, 33) mit der Schmierkammer in Verbindung steht.

4. Turbomaschine nach einem der Ansprüche 1 bis 3, **dadurch gekennzeichnet, dass** die Kupplungseinrichtungen (36, 37) Netzwerke aus radialen Riffelungen sind.

5. Turbomaschine nach einem der Ansprüche 1 bis 4, **dadurch gekennzeichnet, dass** die Hülse über Netzwerke aus axialen Riffelungen (39, 40) mit dem Wellensegment (18) verbunden ist.

6. Turbomaschine nach einem der Ansprüche 2, 4 und 5, **dadurch gekennzeichnet, dass** die Schmierkammer (28) auch die radialen und axialen Riffelungen enthält.

7. Turbomaschine nach einem der Ansprüche 1 bis 6, **dadurch gekennzeichnet, dass** sie einen Aktuator (48) für die Hülse (34) umfasst, der axial zwischen dem Stator (2) der Turbomaschine und dem Rahmen (22) und radial zwischen dem Rahmen (22) und der Hülse (34) untergebracht ist.

8. Turbomaschine nach Anspruch 7, **dadurch gekennzeichnet, dass** der Aktuator mindestens eine Rolle (52) umfasst, die axial beweglich ist und sich frei um eine radiale Achse (53) dreht und dazu ausgelegt ist, an einem ebenen Kragen (44) der Hülse anzuliegen und den Kragen zurückzudrängen.

9. Turbomaschine nach einem der Ansprüche 1 bis 8, **dadurch gekennzeichnet, dass** sie eine Feder (54) umfasst, die um die Niederdruckwelle herum in Eingriff steht und zwischen der Niederdruckwelle (1) und der Hülse (34) zusammengedrückt wird.

10. Turbomaschine nach einem der Ansprüche 1 bis 9, **dadurch gekennzeichnet, dass** das Wellensegment mit einer Mutter (19) am hinteren Ende (5) der Niederdruckwelle befestigt ist.

11. Turbomaschine nach einem der Ansprüche 1 bis 10, **dadurch gekennzeichnet, dass** der Lagerzapfen (15) von der Niederdruckwelle und von der Hülse getrennt werden kann, indem er zur Rückseite hin geschoben wird, die Hülse (34) durch einen ersten Schraubflansch (49), der von hinten zugänglich ist, am Stator (2) der Turbomaschine befestigt ist, und der Stator (11) der elektrischen Maschine durch einen zweiten Schraubflansch (14), der von hinten zugänglich ist, am Stator (2) der Turbomaschine befestigt ist.

12. Turbomaschine nach einem der vorhergehenden Ansprüche, **dadurch gekennzeichnet, dass** der Lagerzapfen (15), die Hülse (34) und der Stator (11) der elektrischen Maschine als unterschiedliche und einheitliche Module ausgebildet sind, die nacheinander von der Turbomaschine demontiert werden können.

13. Turbomaschine nach den Ansprüchen 7 und 12, **dadurch gekennzeichnet, dass** der Aktuator (48) ein weiteres einheitliches Modul ist, das sich von den Modulen unterscheidet und separat von ihnen aus der Turbomaschine demontiert werden kann.

## Claims

1. Turbomachine comprising a low-pressure shaft (1) extending along an axis (X-X) of the turbomachine which defines a front and a rear; a turbomachine stator (2) supporting the low-pressure shaft by bearings including a rear bearing (73); an electrical machine (10) located at a rear portion of the turbomachine and comprising a rotor (12) disconnectably driven by the low-pressure shaft (1), and a stator (11) attached to the stator (2) of the turbomachine; comprising a journal (15) for supporting the rotor (12) of the electrical machine, the journal comprising a shaft segment (18) releasably attached to a rear end (5) of the low-pressure shaft by extending the low-pressure shaft, a frame (22) to which the rotor of the electrical machine is attached and which surrounds the shaft segment (18), **characterized in that** the stator (11) of the electrical machine surrounds the rotor (12) of the electrical machine; and the turbine also comprises at least one bearing (26, 27) mounted between the frame and the shaft segment; and a sleeve (34) that is axially mobile about the low-pressure shaft (1) and/or the shaft segment (18) that is rotationally connected to the low-pressure shaft and the shaft segment, and provided with rearwardly extending coupling means (36) capable of being engaged with forwardly extending complementary coupling means (37) of the frame (22).

2. Turbomachine according to Claim 1, **characterized in that** the at least one bearing (26, 27) is lubricated with grease and is contained in an enclosed lubrication chamber (28).

3. Turbomachine according to Claim 2, **characterized in that** the shaft segment (18) is hollow and contains a grease reservoir (30) that communicates with the lubrication chamber via at least one hole (31, 32, 33).

4. Turbomachine according to one of Claims 1 to 3, **characterized in that** the coupling means (36, 37) are networks of radial grooves.

5. Turbomachine according to one of Claims 1 to 4, **characterized in that** the sleeve is connected to the shaft segment (18) via networks of axial grooves (39, 40).

6. Turbomachine according to Claims 2, 4 and 5, **characterized in that** the lubrication chamber (28) also contains the radial and axial grooves.

7. Turbomachine according to one of Claims 1 to 6, **characterized in that** it comprises an actuator (48) for the sleeve (34), which is housed axially between the turbomachine stator (2) and the frame (22), and radially between the frame (22) and the sleeve (34).

8. Turbomachine according to Claim 7, **characterized in that** the actuator comprises at least one roller (52) that is axially mobile and rotates freely about a radial axis (53), capable of abutting against a flat collar (44) of the sleeve and of pushing back the collar.

9. Turbomachine according to one of Claims 1 to 8, **characterized in that** it comprises a spring (54) engaged around the low-pressure shaft, and compressed between the low-pressure shaft (1) and the sleeve (34).

10. Turbomachine according to one of Claims 1 to 9, **characterized in that** the shaft segment is attached to the rear end (5) of the low-pressure shaft by a nut (19).

11. Turbomachine according to one of Claims 1 to 10, **characterized in that** the journal (15) can be separated from the low-pressure shaft and from the sleeve by sliding backwards, the sleeve (34) is attached to the turbomachine stator (2) by a first bolted flange (49) that can be accessed from the rear, and the stator (11) of the electrical machine is attached to the stator (2) of the turbomachine by a second bolted flange (14) that can be accessed from the rear.

12. Turbomachine according to one of the preceding claims, **characterized in that** the journal (15), the sleeve (34), and the stator (11) of the electrical machine are formed as separate, unitary modules that can be successively dismantled from the turbomachine.

13. Turbomachine according to Claims 7 and 12, **characterized in that** the actuator (48) is another unitary module, distinct from said modules and which can be dismantled separately from them from the turbomachine.
